# EUROPÄISCHE PATENTSCHRIFT

(11) **EP 0 997 332 B1**
(45) Veröffentlichungstag und Bekanntmachung des Hinweises auf die Patenterteilung: **24.08.2005**
(21) Anmeldenummer: 99121262.2
(22) Anmeldetag: 25.10.1999
(51) Int. Cl.: B60J 7/00

(54) **Fahrzeugdach**
Vehicle roof
Toit de véhicule

(30) Priorität: 29.10.1998 DE 19849840
(43) Veröffentlichungstag der Anmeldung: 03.05.2000
(73) Patentinhaber: Webasto Dachsysteme GmbH, 82131 Stockdorf (DE)
(72) Erfinder: Teschner, Helmut, 86923 Finning (DE); Schätzler, Walter, 82319 Starnberg (DE); Jardin, Hans, 82266 Bachern (DE); Pfalzgraf, Manfred, 82211 Herrsching (DE)
(74) Vertreter: Wiese, Gerhard

(56) Entgegenhaltungen:
- EP-A- 0 301 419
- DE-A- 3 545 014
- NL-A- 9 102 116

## Beschreibung

Die Erfindung bezieht sich auf ein transparentes Fahrzeugdach.

Aus DE 37 25 053 A1 ist ein Kraftfahrzeug-Glasdach mit einer außenliegen ersten Glasscheibe, die aus Weißglas gefertigt sein kann, bekannt, welche in einem ersten Teilbereich, der über einer in der festen Dachhaut ausgebildeten Sichtöffnung liegt, an ihrer Unterseite in Verbundbauweise mit einer kleineren Glasscheibe versehen ist, die einen Teil der einfallenden Sonnenenergie absorbiert, und in einem zweiten Teilbereich, der über einem festen Dachteil liegt, an ihrer Unterseite mit Solarzellen versehen ist. Nachteilig dabei ist die fehlende Öffnungsfähigkeit des Glasdaches.

Aus DE 37 13 854 A1 ist ein Fahrzeugdach mit einer von zwei Deckeln verschließbaren Dachöffnung in einer festen Dachhaut bekannt, wobei der vordere, als Schiebe-Hebe-Deckel ausgebildete Deckel im wesentlichen aus einer Scheibe aus einem lichtdurchlässigen Werkstoff besteht, die entweder in ihrem Randbereich, der eine Durchsicht von oben auf die Deckelmechanik verhindern soll, oder auch vollständig mit Solarzellen versehen ist. Der hintere, nicht transparente Deckel kann als ganzes von Hand aus seiner Halterung genommen werden, so daß der vordere Deckel ganz nach hinten geschoben werden kann. Nachteilig dabei ist die umständliche Bedienung des hinteren Deckels zur Schaffung einer großen Durchsichtsfläche.

Aus der DE 37 13 853 A1 ist ein Fahrzeugdach mit einem transparenten, nach Art eines Spoilerdachs ausgebildeten Deckel bekannt, der in seinem hinteren Teil mit Solarzellen versehen ist. Die Durchsichtsfläche dieses Daches ist verhältnismäßig klein.

Es ist Aufgabe der vorliegenden Erfindung, ein Fahrzeugdach zu schaffen, welches in einem großen Bereich des Fahrzeuginnenraums eine Durchsicht nach außen erlaubt, öffnungsfähig ist, eine effiziente Nutzung der auf das Dach einfallenden Solarenergie ermöglicht und einfach hergestellt werden kann.

Diese Aufgabe wird erfindungsgemäß durch ein Fahrzeugdach gemäß Anspruch 1 gelöst.

Weitere bevorzugte Ausgestaltungen der Erfindung ergeben sich aus den Unteransprüchen.

Bei dieser erfindungsgemäßen Lösung ist einerseits vorteilhaft, daß die Sonnenstrahlung zur Solarenergieerzeugung genutzt werden kann, ohne dadurch die konstruktionsbedingt optimal mögliche Durchsicht aus dem Fahrzeuginneren nach außen zu vermindern. Andererseits wird das Vorsehen von zwei unabhängigen transparenten Dachelementen ein großräumiger Lichteinfall bzw. großräumige Durchsicht nach außen bei gleichzeitiger Öffnungsfähigkeit des Fahrzeugdaches gewährleistet, wobei ein einfacher Aufbau des Daches möglich ist. Erfindungsgemäß ist das feste durchsichtige Dachelement in eine mit Solarzellen versehene Solarscheibe und in eine Durchsichtsscheibe geteilt, wobei vorzugsweise die Solarscheibe aus Klarglas oder aus Weißglas gefertigt ist und die Durchsichtsscheibe zur Minderung der Transmission von sichtbarem Licht und/oder von Infrarot-Strahlung ausgelegt ist. Dies erlaubt eine optimale Ausnutzung der Solarenergie bei erhöhtem Komfort für die Insassen, wobei eine einfache Fertigung gewährleistet ist.

Die Solarzellen sind in einem Nicht-Durchsichtsbereich nahe dem hinteren Dachende angeordnet.

Im Bereich der Vorderkante einer durch das bewegbare Dachelement verschließbaren Dachöffnung kann eine Windabweislamelle angeordnet sein, die mit Solarzellen belegt ist.

In vorteilhafter Ausgestaltung der Erfindung ist vorgesehen, daß ein Durchsichtsbereich mindestens eines der durchsichtigen Dachelemente mit einer die Transmission im Infrarot-Spektralbereich und/oder von sichtbarem Licht mindernden Beschichtung versehen ist. Dadurch kann eine übermäßige Sonneneinstrahlung in den Fahrzeuginnenraum bzw. eine übermäßige Aufheizung desselben verhindert werden.

Im folgenden sind zwei Ausführungsformen anhand der Zeichnungen näher erläutert. Es zeigen:
- FIG. 1: eine Aufsicht auf ein Fahrzeugdach in einer ersten Ausführungsform;
- FIG. 2: einen Längsschnitt durch das Fahrzeugdach von Fig. 1;
- FIG. 3: eine Aufsicht auf ein Fahrzeugdach in der erfindungegemäßen Ausführungsform, und
- FIG. 4: einen Längsschnitt durch das Fahrzeugdach von Fig. 3.

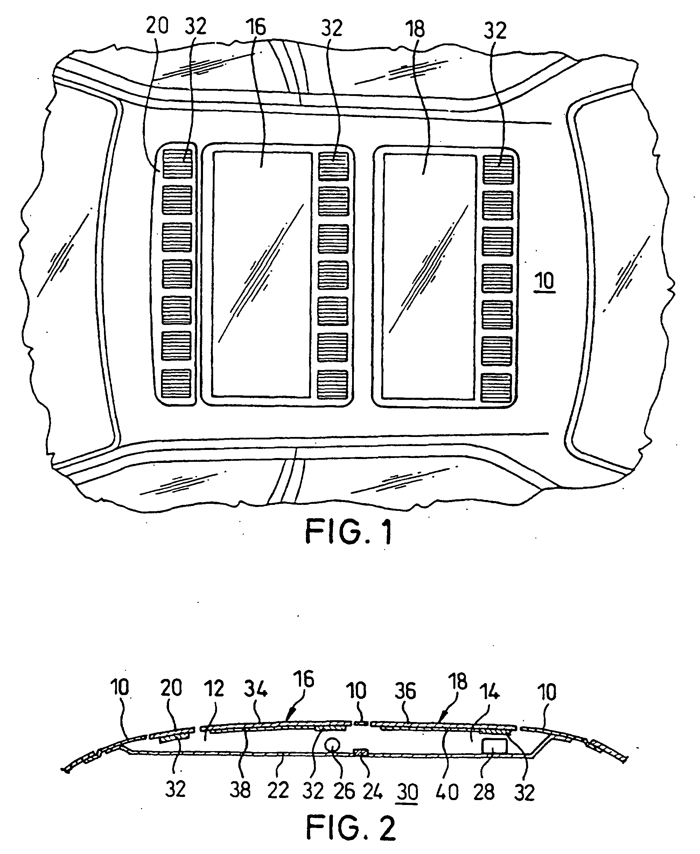

Unter Bezugnahme auf die FIG. 1 und 2 sind in einer festen Dachhaut 10 hintereinander zwei Dachöffnungen 12 und 14 ausgebildet, wobei die vordere Dachöffnung 12 von einem verschiebbaren und/oder ausstellbaren Deckel 16 verschließbar ist und die hintere Dachöffnung 14 von einem dachfesten Deckel 18 verschlossen ist. Im Bereich der Vorderkante der vorderen Dachöffnung 12 ist eine ausschwenkbare Windabweislamelle 20 angeordnet. Unterhalb der Dachöffnungen 12, 14 ist ein Rahmen 22 dachfest montiert, auf welchem der vordere Deckel 16 verschiebbar geführt ist und der hintere Deckel 18 abgestützt ist. Im Bereich zwischen den Dachöffnungen 12, 14 ist der Rahmen 22 mittels einer Querstrebe 24 versteift. Dadurch ist es nicht erforderlich, daß der hintere Deckel 18 eine Versteifungsfunktion übernimmt, so daß dieser aus relativ weichem Material ausgebildet sein kann. In diesem Bereich ist auch die Walze 26 eines Schiebe-Rollos angeordnet, mittels welchem die Dachöffnung 12 von unten abgedeckt werden kann. Am hinteren Ende der hinteren Dachöffnung 14 liegt ein schematisch dargestellter mit 28 bezeichneter Bereich, welcher Befestigungs- und/oder Antriebselemente umfaßt und eine Durchsicht aus dem Fahrzeuginnenraum 30 nach außen verhindert.

Die Windabweislamelle 20 ist mit Solarzellen 32 versehen. Die beiden Deckel 16, 18 umfassen jeweils eine transparente Scheibe 34 bzw. 36, bei der es sich z.B. um eine Klarglas- bzw. Weißglasscheibe handeln kann. Der nachfolgend beschriebene Aufbau der Scheiben 34 bzw. 36 gehört nicht zum Gegenstand der Erfindung. Die Scheiben 34, 36 sind in ihrem hinteren Randbereich, der über der Querstrebe 24 und der Rollowalze 26 bzw. dem Mechanikbereich 28 liegt und somit zur Durchsicht aus dem Fahrzeuginnenraum 30 nach außen konstruktionsbedingt, d.h. durch den konstruktiven Aufbau des Fahrzeugdaches bedingt, nicht nutzbar ist, an ihrer Unterseite jeweils mit Solarzellen 32 versehen. Im Durchsichtsbereich aus dem Fahrzeuginnenraum 30 nach außen sind die Scheiben 34 bzw. 36 jeweils mit einer Schicht 38 bzw. 40 versehen, welche die Transmission des Deckels 16 bzw. 18 im Infrarot-Bereich vermindert, um eine übermäßige Aufheizung des Fahrzeuginnenraums 30 zu verhindern. Diese Schicht 38 bzw. 40 kann so ausgebildet sein, daß die Transmission des Deckels 16, 18 auch im sichtbaren Spektralbereich vermindert wird, um eine übermäßige Sonneneinstrahlung in den Fahrzeuginnenraum 30 zu verhindern und so den Komfort für die Insassen zu vergrößern. Bei der Schicht 40 kann es sich z.B. um eine mittels einer Klebefolie aufgeklebte eingefärbte transparente Polycarbonat-Folie handeln. Ferner kann die Scheibe 34 bzw. 36 vor dem Aufbringen der Polycarbonat-Folie mit einem Metalloxid beschichtet werden. Alternativ kann statt der Polycarbonat-Folie eine kratzfest beschichtete Abdunklungsfolie ("Dark-Tail-Folie") verwendet werden, die mittels aufgebrachtem Acrylatkleber direkt auf die Scheibe 34 bzw. 36 aufgeklebt wird. Es kann auch ganz auf die Verwendung einer Folie verzichtet werden. In diesem Fall wird die Scheibe 34 bzw. 36 stattdessen mit einer geeigneten transmissionsmindernden Beschichtung versehen. Dabei kann es sich um ein auf die Unterseite aufgebrachtes Metalloxid, insbesondere Titanoxid bei Verwendung einer Sekurit-Scheibe handeln. Alternativ kann die Scheibe 34 bzw. 36, insbesondere, wenn sie aus Flachglas besteht, mit Siglachrom oder Palladium beschichtet werden. Ferner kann die Scheibe 34, 36 mit einer schwarzen Keramikbedruckung mit Punkt- oder Lochfritten versehen sein.

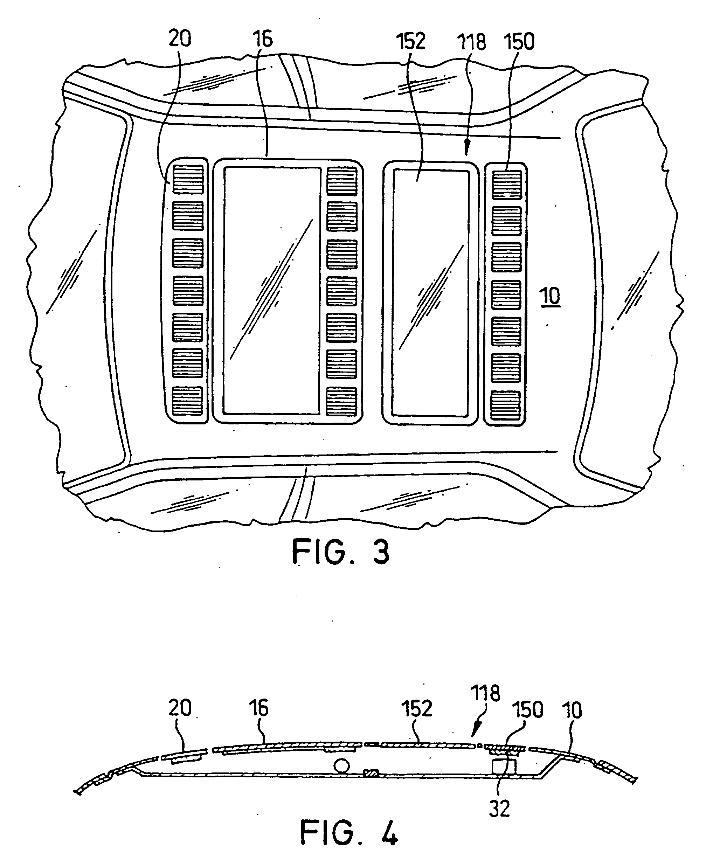

In Fig. 3 und 4 ist die erfindungsgemäße Ausführungsform des hinteren Deckels 118 dargestellt, der nicht, wie bisher beschrieben, einstückig ausgebildet ist, sondern vielmehr in eine mit an ihrer Unterseite mit Solarzellen 32 versehene, vorzugsweise aus Klarglas oder Weißglas gefertigte Solarscheibe 150 und in eine Durchsichtsscheibe 152 geteilt ist, die zur Minderung der Transmission von sichtbarem Licht und/oder von Infrarot-Strahlung ausgelegt ist, indem sie in der Masse eingefärbt ist.

### Bezugszeichenliste

- feste Dachhaut: **10**
- vordere Dachöffnung: **12**
- hintere Dachöffnung: **14**
- vorderer Deckel: **16**
- hinterer Deckel: **18, 118**
- Windabweislamelle: **20**
- Rahmen: **22**
- Querstrebe von 22: **24**
- Rollowalze: **26**
- Dachmechanikbereich: **28**
- Fahrzeuginnenraum: **30**
- Solarzellen: **32**
- Scheibe von 16: **34**
- Scheibe von 18: **36**
- transmissionsmindernde Schicht: **38, 40**
- Solarscheibe von 118: **150**
- Durchsichtscheibe von 118: **152**

## Patentansprüche

1. Fahrzeugdach mit wenigstens einem durchsichtigen bewegbaren Dachelement (16), das an einem mit dem Fahrzeugdach verbindbaren Rahmen (22) verschiebbar geführt ist und einen Durchsichtsbereich zur Durchsicht vom Fahrzeuginneren (30) nach außen aufweist, und mit wenigstens einem durchsichtigen, dachfest montierten Dachelement (118), das in Fahrzeuglängsrichtung gegenüber dem durchsichtigen bewegbaren Dachteil versetzt an dem Rahmen abgestützt ist und ebenfalls einen Durchsichtsbereich für eine Durchsicht vom Fahrzeuginneren nach außen aufweist, wobei ein Nicht-Durchsichts-Flächenbereich (150) des durchsichtigen, dachfest montierten Dachelements (118) nahe dem hinteren Dachende, der konstruktionsbedingt zur Durchsicht vom Fahrzeuginneren nach außen nicht nutzbar ist, mit Solarzellen (32) versehen ist und wobei das durchsichtige, dachfest montierte Dachelement (118) in eine mit Solarzellen (32) versehene Solarscheibe (150) und in eine Durchsichtsscheibe (152) geteilt ist.

2. Fahrzeugdach nach Anspruch 1, bei dem der Rahmen (22) zwischen einer durch das bewegbare Dachelement (16) verschließbaren Dachöffnung (12) und einer von dem festen Dachelement (118) abgedeckten Dachöffnung (14) mittels einer Querstrebe (24) versteift ist, und bei dem auch Solarzellen (32) in einem von der Querstrebe (24) bestimmten Nicht-Durchsichtsbereich des durchsichtigen bewegbaren Dachelementes (16) angeordnet sind.

3. Fahrzeugdach nach einem der vorhergehenden Ansprüche, bei dem Solarzellen (32) in einem Nicht-Durchsichtsbereich mindestens eines der durchsichtigen Dachelemente (16 bzw. (118) entlang den Seitenrändern des Daches vorgesehen sind.

4. Fahrzeugdach nach einem der vorhergehenden Ansprüche, bei dem im Bereich der Vorderkante einer durch das bewegbare Dachelement (16) verschließbaren Dachöffnung (12) eine Windabweislamelle (20) angeordnet ist, die mit Solarzellen (32) versehen ist.

5. Fahrzeugdach nach einem der vorhergehenden Ansprüche, bei dem ein Durchsichtsbereich mindestens eines der durchsichtigen Dachelemente (16 bzw. 118) mit einer die Transmission im Infrarot-Spektralbereich mindernden Schicht (38 bzw. 40) versehen ist.

6. Fahrzeugdach nach einem der vorhergehenden Ansprüche, bei dem ein Durchsichtsbereich mindestens eines der durchsichtigen Dachelemente (16 bzw. 118) mit einer die Transmission von sichtbarem Licht mindernden Schicht (38 bzw. 40) versehen ist.

7. Fahrzeugdach nach einem der vorhergehenden Ansprüche, bei dem ein Durchsichtsbereich und ein Nicht-Durchsichtsbereich des durchsichtigen bewegbaren Dachelementes (16) einstückig miteinander verbunden sind.

8. Fahrzeugdach nach nach einem der Ansprüche 1 bis 7, bei dem die Solarscheibe (150) aus Klarglas oder aus Weißglas gefertigt ist.

9. Fahrzeugdach nach einem der vorhergehenden Ansprüche, bei dem die Durchsichtsscheibe (152) zur Minderung der Transmission von sichtbarem Licht und/oder von Infrarot-Strahlung ausgelegt ist.

10. Fahrzeugdach nach Anspruch 9, bei dem die Durchsichtsscheibe (152) in der Masse eingefärbt ist.

## Claims

1. Vehicle roof having at least one transparent movable roof element (16), which is guided such that it can be displaced on a frame (22) that can be connected to the vehicle roof and has a viewing region for a view to the outside from the vehicle interior (30), and having at least one transparent roof element (118) which is mounted fixed to the roof and which, in the vehicle longitudinal direction, is mounted on the frame so as to be offset with respect to the transparent movable roof part and likewise has a viewing region for a view to the outside from the vehicle interior, a non-viewing surface region (150) of the transparent roof element (118) that is mounted fixed to the roof, close to the rear end of the roof and, as a result of the design, cannot be used for the view to the outside from the vehicle interior, being provided with solar cells (32), and the transparent roof element (118) that is mounted fixed to the roof being divided into a solar pane (150) provided with solar cells (32) and into a viewing pane (152).

2. Vehicle roof according to Claim 1, in which the frame (22) is stiffened by means of a transverse strut (24) between a roof opening (12) that can be closed by the movable roof element (16) and a roof opening (14) covered by the fixed roof element (118), and in which solar cells (32) are also arranged in a non-viewing region of the transparent, movable roof element (16) determined by the transverse strut (24).

3. Vehicle roof according to one of the preceding claims, in which solar cells (32) are provided in a non-viewing region of at least one of the transparent roof elements (16 and 118, respectively) along the side edges of the roof.

4. Vehicle roof according to one of the preceding claims, in which a wind deflector slat (20) which is provided with solar cells (32) is arranged in the region of the front edge of a roof opening (12) that can be closed by the movable roof element (16).

5. Vehicle roof according to one of the preceding claims, in which a viewing region of at least one of the transparent roof elements (16 or 118) is provided with a layer (38 or 40) that reduces the transmission in the infrared spectral range.

6. Vehicle roof according to one of the preceding claims, in which a viewing region of at least one of the transparent roof elements (16 or 118) is provided with a layer (38 or 40) that reduces the transmission of visible light.

7. Vehicle roof according to one of the preceding claims, in which a viewing region and a non-viewing region of the transparent, movable roof element (16) are connected to each other in one piece.

8. Vehicle roof according to one of Claims 1 to 7, in which the solar pane (150) is fabricated from clear glass or colourless glass.

9. Vehicle roof according to one of the preceding claims, in which the viewing pane (152) is designed to reduce the transmission of visible light and/or of infrared radiation.

10. Vehicle roof according to Claim 9, in which the viewing pane (152) is self-coloured.

## Revendications

1. Toit de véhicule comprenant au moins un élément de toit mobile transparent (16) qui est guidé à coulissement sur un cadre (22) pouvant être relié audit toit de véhicule, et qui comporte une zone de transparence vers l'extérieur à partir de l'espace interne (30) du véhicule ; et au moins un élément de toit transparent (118) monté avec assujettissement au toit, prenant appui sur le cadre dans le sens longitudinal du véhicule, avec décalage par rapport à la partie mobile transparente, et pareillement muni d'une zone de transparence vers l'extérieur depuis l'espace interne du véhicule, sachant qu'une région superficielle (150) non transparente de l'élément de toit transparent (118) monté avec assujettissement au toit est dotée de cellules solaires (32) à proximité de l'extrémité postérieure du toit, ladite région n'étant pas utilisable, du fait de sa structure, pour la transparence vers l'extérieur à partir de l'espace interne du véhicule ; et sachant que ledit élément de toit transparent (118), monté avec assujettissement au toit, est scindé en une vitre transparente (152) et en une vitre solaire (150) pourvue de cellules solaires (32).

2. Toit de véhicule selon la revendication 1, dans lequel le cadre (22) est rigidifié au moyen d'une entretoise (24) entre une ouverture (12) du pavillon, pouvant être obturée par l'élément de toit mobile (16), et une ouverture (14) du pavillon recouverte par l'élément de toit fixe (118) ; et dans lequel des cellules solaires (32) sont également disposées dans une zone de non-transparence de l'élément de toit transparent mobile (16), déterminée par ladite entretoise (24).

3. Toit de véhicule selon l'une des revendications précédentes, dans lequel des cellules solaires (32) sont prévues le long des bords latéraux dudit toit, dans une zone de non-transparence d'au moins l'un des éléments de toit transparents (16, respectivement 118).

4. Toit de véhicule selon l'une des revendications précédentes, dans lequel une lamelle déflectrice (20), munie de cellules solaires (32), est prévue dans la région du bord antérieur d'une ouverture (12) du pavillon pouvant être obturée par l'élément de toit mobile (16).

5. Toit de véhicule selon l'une des revendications précédentes, dans lequel une zone de transparence d'au moins l'un des éléments de toit transparents (16, respectivement 118) est dotée d'une couche (38, respectivement 40) atténuatrice de la transmission dans la zone spectrale infrarouge.

6. Toit de véhicule selon l'une des revendications précédentes, dans lequel une zone de transparence d'au moins l'un des éléments de toit transparents (16, respectivement 118) est munie d'une couche (38, respectivement 40) atténuatrice de la transmission de lumière visible.

7. Toit de véhicule selon l'une des revendications précédentes, dans lequel une zone de transparence et une zone de non-transparence de l'élément de toit mobile transparent (16) sont reliées l'une à l'autre d'un seul tenant.

8. Toit de véhicule selon l'une des revendications 1 à 7, dans lequel la vitre solaire (150) est fabriquée en verre transparent ou en verre dépoli.

9. Toit de véhicule selon l'une des revendications précédentes, dans lequel la vitre transparente (152) est conçue pour atténuer la transmission de lumière visible et/ou d'un rayonnement infrarouge.

10. Toit de véhicule selon la revendication 9, dans lequel la vitre transparente (152) est teintée dans la masse.
